Europäisches Patentamt

European Patent Office

Office européen des brevets

(11) Publication number: **0 321 216**
**A2**

(12) **EUROPEAN PATENT APPLICATION**

(21) Application number: **88311836.6**

(22) Date of filing: **14.12.88**

(51) Int. Cl.⁴: **C08B 37/00** , **C08J 3/00**

(30) Priority: **17.12.87 US 133977**
**21.07.88 US 222643**

(43) Date of publication of application:
**21.06.89 Bulletin 89/25**

(84) Designated Contracting States:
**AT FR**

(71) Applicant: **Stauffer, Kenneth R.**
**559 Bridgetown Road**
**Saunderstown RI 02874(US)**

Applicant: **Stauffer, Sang Lee**
**559 Bridgetown Road**
**Saunderstown RI 02874(US)**

(72) Inventor: **Stauffer, Kenneth R.**
**559 Bridgetown Road**
**Saunderstown RI 02874(US)**
Inventor: **Stauffer, Sang Lee**
**559 Bridgetown Road**
**Saunderstown RI 02874(US)**

(74) Representative: **Woodcraft, David Charles et al**
**BROOKES & MARTIN High Holborn House**
**52/54 High Holborn**
**London, WC1V 6SE(GB)**

(54) **Method of enhancing the V1/V2 viscosity profile of Xanthan.**

(57) Xanthan gum is thermally treated while in the dry state ( 15% moisture or less) to render its room temperature 24°C(75°F.) hydration viscosity ($V_1$)/higher temperature 41°C(150°F.) viscosity ratio ($V_2$) between 1.02 and 1.45 as described by Food Chemical Codex. This process will either increase the room temperature 24°C(75°F.) hydration viscosity ($V_1$) and/or decrease the higher temperature 41°C(150°F.) viscosity ($V_2$).

Thus, a final product will result wherein the $V_1/V_2$ ratio will lie between 1.02 and 1.45.

EP 0 321 216 A2

## METHOD OF ENHANCING THE $V_1/V_2$ VISCOSITY PROFILE OF XANTHAN

This invention relates to methods of enhancing the $V_1$-$V_2$ viscosity profile of Xanthan.

According to the invention, the $V_1$-$V_2$ viscosity profile of Xanthan is enhanced when milled into a powder equilibrated at approximately 8 to 15% moisture, prior to thermal drying and re-exposed to atmospheric conditions until approximately 8 to 15% moisture is regained.

Dioctyl sodium sulfosuccinate (DSS) may also be used to increase the cold water viscous element.

### 1) Rheological procedure

The viscosity profile can best be described by the FCC monogram III for food grade Xanthan which is quoted as follows:- "Viscosity: prepare two identical solutions, each containing 1 % of the sample and 1% of potassium chloride in water, and, stir for two hours. Determine the viscosity of one solution at 23.9°C (75°F.) as directed under Viscosity of Sodium Carboxymethyl-cellulose, page 550, using a No. 3 spindle rotating at 60 rpm. The viscosity ($V_1$) thus determined is not less than 600 centipoises. Determine the viscosity ($V_2$) of the other solution in the same manner, but maintain the temperature at 65.5°C(150°F.). The ratio of the viscosities, $V_1/V_2$ is between 1.02 and 1.45".

### 2) Applicants' Rendering of Xanthan Material:

Applicants' thermal rendering of Xanthan material, liquid, paste, fibrous, or powder (i.e. around 8%-15% moisture) is accomplished by reducing Type I water or monolayer water to a content between 7.0% (0.07g $H_2O$/g dry matter) and 0.0% or moisture free condition. See Table 2-3 of Fennema, "Principles of Food Science, Part 1, Food Chemistry", pages 30-31, 1976 by Marcel Dekker, New York. This table also shows that Type I water, as found in food and related living material, is unfreezable, has no solvent capacity, mobility of water is reduced, and deterioration usually increases or stability decreases. It is this phenomena which is unique for drying of Xanthan matter. The viscosity or $V_1/V_2$ ratio as outlined above is actually improved by this conditioning rather than being decreased.

The moisture % range for applicants' process in which rendering occurs is in the region of Type I water structure as discussed by Fennema which is the range 7.0% to 0.0%, with the following precautions:

a) The upper limit of 7.0 % is a general moisture content for all tissue like material and therefore could vary in Xanthan. (See Fennema page 33, list #2).

b) Type I water itself does not have exact boundaries. (See Fennema page 33, list #3).

c) The total moisture as well as bound water % is dependent upon the method of measurement (see Fennema page 33, list #1). This is critical is determining the lower limit. For example, a common routine method to determine the dry matter of a material is to vacuum dry the material for a set period of time. The loss upon drying is recorded as moisture, however, other volatile including $CO_2$ from decarboxylation can cause this. In turn, when the moisture loss of applicants' process is compared to the total moisture loss from analysis, it might not accurately reflect the actual amount of moisture remaining.

### 3) Starting materials with abbreviations:

a. Dry Xanthan from Miles (Mi);

b. Dry Xanthan from bacterium NRRL-1459A (NR) and

c. Dry Xanthan from Pfizer (Pf).

4) All examples were dried to moisture content of 6.9 ~ 00%, but typically a level of 0.4 ~ 0.6 was common.

### EXAMPLE NO.1

Thermal drying of various dried Xanthans by use of an infrared heat source.

Xanthan powders were subjected to an I R heat lamp (250W, 115-125V) contained in a Cenco Moisture Balance. The individual Xanthans (Mi, NR & Pf) were maintained in the Cenco Moisture chamber for 10 minutes at a lamp setting of 90/120) which allowed all samples to be dried down to the lower end limit (approximately 0.0%) of the monolayer but not allow any burning. Next, the samples were allowed to rehydrate on the moisture balance pan (with lid open and exposed to atmospheric conditions) until the moisture of 13% ± 1 was again maintained. These samples were sealed and retained for the FCC III viscosity profile analysis.

TABLE NO. 1

| RESULTS* | | | | | | |
|---|---|---|---|---|---|---|
| Starting Material | Untreated | | | Thermal JR Treated | | |
| | $V_1$ | $V_2$ | $V_1/V_2$ | $V_1$ | $V_2$ | $V_1/V_2$ |
| Xanthans | | | | | | |
| (Mi) | 16.00 | 15.40 | 1.04 | 16.20 | 15.40 | 1.05 |
| (NR) | 14.60 | 14.60 | 1.00 | 14.90 | 14.30 | 1.04 |
| (Pf) | 14.20 | 15.20 | 0.93 | 15.10 | 14.70 | 1.03 |

\* Viscosity in poise

From the above results, it is clear that the Pf sample untreated was outside the $V_1/V_2$ ratio (0.93) whereas the thermal treated sample was in the 1.02-1.45 viscosity range, being (1.03). The NR and Mi sample both showed an increase in $V_1$ viscosity of 14.60 to 14.90 and 16.0 to 16.2 poise, respectively.

EXAMPLE NO.2

Thermal drying of Xanthan where a commercial mill is used to supply a portion of the heat.

Pf Xanthan was milled to a fine powder wherein the temperature reached 130° F. This heated product was in turn exposed to the infra-red heat source to further heat and reduce the moisture content of 13 ± 1%. Results show that the original $V_1/V_2$ ratio of 14.20/15.20 = 0.93 was increased into the FCC 1.02 to 1.45 range of 15.20/14.70 = 1.03.

EXAMPLE NO.3

A Thermal process with Dioctyl Sodium Sulfosuccinate (DSS).

Mi, NR and Pf Xanthans were treated with Dioctyl Sodium Sulfosuccinate (DSS) at a level not to exceed 0.75 DSS based upon the weight of the biopolymer Xanthan. These treated gums were in turn thermally processed as outlined in Example No.1 and the results are as follows:

3

TABLE NO. 2

| RESULTS | | | | | | |
|---|---|---|---|---|---|---|
| Starting Material | DSS Only | | | DSS and Infra-red heat | | |
| Xanthans | | | | | | |
| Mi | 16.20 | 15.40 | 1.05 | 16.60 | 15.40 | 1.08 |
| NR | 14.90 | 14.60 | 1.02 | 15.20 | 14.40 | 1.06 |
| Pf | 14.70 | 15.20 | 0.97 | 15.20 | 14.70 | 1.03 |

From the above results, it is clear that the DSS addition has an advantage of increasing the cold water viscose element ($V_1$).

## EXAMPLE NO.4

A Microwave Thermal Process.

Xanthan Mi, NR and Pf were subjected to microwave for a period of time to reduce their moisture content to within the Fennema monolayer range, approximately 0.4 to 0.2% water. These samples were then allowed to rehydrate to 13 ± 1% prior to their rheological examination. The results can be seen in Table No.3.

TABLE NO. 3

| RESULTS | | | | | | |
|---|---|---|---|---|---|---|
| Starting Material | Untreated | | | Microwave Treated | | |
| | $V_1$ | $V_2$ | $V_1/V_2$ | $V_1$ | $V_2$ | $V_1/V_2$ |
| Xanthans | | | | | | |
| Mi | 16.00 | 15.40 | 1.04 | 16.10 | 15.40 | 1.05 |
| NR | 14.60 | 14.60 | 1.00 | 15.10 | 14.40 | 1.05 |
| Pf | 14.20 | 15.20 | 0.93 | 15.20 | 14.70 | 1.03 |

As seen above, similar results are obtained where IR heat or microwave heat is used.

## EXAMPLE NOS. 5 AND 6

Isothermal and Gradient heat profiles with a turbo or tray drier.

Two samples designated No.5 isothermal and No.6 gradient heat were evaluated by a simulated turbodrier where samples one inch thick were transferred from tray to tray every 5-8 minutes for 4-6 hours. Sample No. 5 was maintained at 225° F., whereas Sample No. 6 showed gradient temperatures of 140° - 175° F. and 100° -225° F. Other test conditions are shown in the following Table No.4.

4

TABLE NO. 4

| Test conditions for Examples Nos. 5 and 6 | | |
|---|---|---|
| TEST | NO. 5 | NO. 6 |
| *Moisture of Test Feed (Wet Basis) | 10.8 | 10.6 |
| *Moisture of Test Product (Wet Basis) | .6 | .8 |
| Density of Test Feed, Loose (lbs./cu.ft.) | 38.9 | 38.9 |
| Density of Text Product, Loose (lbs./cu.ft.) | 39.4 | 39.6 |
| Velocity of Drying Atmosphere (FPM) | 250 | 250 |
| Layer thickness (inches) | 1 | 1 |
| Transfer Rate (minutes) | 5 | 8 |
| Wiper Material | SS | SS |
| Drying Atmosphere Composition | --------air-------- | |
| Test Drying Time | See Drying Curves, Graph No. 1 | |
| Temperature of Product | 225° F. | 140°-175° F. 200°-225° F. |

As seen from Table No. 4, the respective initial moisture analysis by a compertrac at 130° C. were 10.8% and 10.6%, whereas their final moisture content was 0.6% and 0.8%, respectively. The moisture loss is shown in Graph No. 1.

The viscosity profiles $V_1/V_2$ were conducted on Sample Nos. 5 and 6 on an "as is" moisture basis and also on an equilibrated basis of 15% moisture. See Table Nos. 5 and 6.

GRAPH NO. 1. Drying Curves of Examples 5 and 6

TABLE NO. 5

| Viscosity of Example No. 5 Iso-thermal heat | | | |
|---|---|---|---|
| Drying Time in Minutes | Starting | Material | Xanthan |
| | Viscosity | PF"as is" | Pf 15% moisture equ. |
| 0 | $V_1$<br>$V_2$<br>$V_1/V_2$ | 20.00<br>26.00<br>0.77 | 14.40<br>18.40<br>0.78 |
| 60 | $V_1$<br>$V_2$<br>$V_1/V_2$ | 20.00<br>26.00<br>0.77 | 14.80<br>18.40<br>0.78 |
| 120 | $V_1$<br>$V_2$<br>$V_1/V_2$ | 20.00<br>19.00<br>1.05 | 16.30<br>15.50<br>1.05 |

TABLE NO. 6

| Viscosity of Example No. 6 Gradient heat. | | | |
|---|---|---|---|
| Drying Time in Minutes | Starting | Material | Xanthan |
| | Viscosity | PF"as is" | Pf 15% moisture equ. |
| 0 | $V_1$<br>$V_2$<br>$V_1/V_2$ | 20.00<br>26.00<br>0.77 | 14.40<br>18.40<br>0.78 |
| 60 | $V_1$<br>$V_2$<br>$V_1/V_2$ | 21.00<br>26.00<br>0.80 | 15.50<br>18.40<br>0.84 |
| 120 | $V_1$<br>$V_2$<br>$V_1/V_2$ | 21.00<br>26.00<br>0.80 | 15.50<br>18.40<br>0.84 |
| 180 | $V_1$<br>$V_2$<br>$V_1/V_2$ | 22.00<br>26.00<br>0.85 | 16.40<br>18.40<br>0.89 |
| 240 | $V_1$<br>$V_2$<br>$V_1/V_2$ | 29.50<br>25.00<br>1.18 | 19.20<br>15.60<br>1.23 |

From Graph No.1 and Table Nos. 5 and 6, it can be seen that a point is reached where the $V_1/V_2$ ratio is increased from the initial ratio of around 0.8 to a ratio greater than 1.02 (the FCC-III Minimum) at around 2 hours for the "as is" Sample No.5, and at about 4 hours for the "as is" Sample No.6.

These samples clearly show that the $V_1$ element or cold water thickening increases with this process and $V_2$ will decrease.

Also, by use of a gradient process versus an isothermal process, the actual change in viscosity occurred later, which is normal, but also the quality of the product (i.e., $V_1$ $V_2$ and $V_1/V_2$) were enhanced. By comparison of the "as is" data to the 15% moisture equilibrate data of examples from Tables 5 and 6, it is clear that the equilibration is for testing only and did not effect the process phenomena. This is a very

7

practical aspect of the invention since "as is" conditions can change from day to day.

## EXAMPLE NO.7

### Fluidized Bed Dryer.

Samples of 500 gms each of Mi, NR and Pf were fluxed with convection heat flow generated by a hot air dryer. The hot air dryer (i.e. hair dryer) was clamped directly under a No. 400 U.S. standard sieve (which contained the sample) and covered with No. 270 U.S. sieve. The gums were allowed to dance on the hot air convection current until their moisture content was reduced to 1% (approximately 2-1/2 hours). In turn, the dryer was switched to cool air and allowed to cool to room temperature (approximately 23°C.). Next, the samples were equilibrated to 14% moisture for viscosity assay. The results before show that the gums were thermally rendered to produce a final product with a viscosity profile as reported by FCC III monogram for Xanthan gum.

| RESULTS: | | |
|---|---|---|
| Sample | Untreated $V_1/V_2$ | Treated $V_1/V_2$ |
| Mi | 1.04 | 1.05 |
| NR | 1.00 | 1.04 |
| Pf | 0.94 | 1.04 |

## EXAMPLE NOS.8 AND 9

### Freeze-dried and Vacuumed Dried.

Samples Mi and NR were dried to 0.5% w/w moisture overnight (18 hours) in a Labconco Freeze Dryer. Two sets of data were collected in which one set was obtained in which the gum powder was frozen to -125°C. prior to drying. The other set of data was generated without prior freezing so that only vacuum drying conditions prevailed. Results show (see below) that in both cases $V_1$ was increased.

| RESULTS: | | | |
|---|---|---|---|
| Sample | Untreated $V_1$ | Freeze-dried Treated $V_1$ | Vacuum dried Treated $V_1$ |
| Mi | 16.10 | 16.40 | 16.20 |
| NR | 14.40 | 14.60 | 14.80 |
| Pf | 14.60 | 14.80 | 14.80 |

## EXAMPLE NO. 10

Samples NR, Mi and Pf were prepared to a paste condition each containing 11.9% of pulverized powder and 89.1% moisture. All pastes were in turn vacuum dried (as shown in Example 9) overnight (18 hours). Results show (see below) that in both paste samples the $V_1/V_2$ ratio was changed.

| Sample | Untreated $V_1/V_2$ | Treated $V_1/V_2$ |
|---|---|---|
| Mi | 1.04 | 1.11 |
| Pf | 0.87 | 1.23 |
| NR | 1.02 | 1.08 |

Examples Nos. 1-9 show a thermal rendering of dried Xanthan gum to produce an increased $V_1$ - (considered a room temperature viscosity) profile or a $V_1/V_2$ ratio suitable for FCC-III approval. In the freeze drying process, only the less bound water (water greater than 7%) actually freezes. However, water was reduced to around 0.5% for both processes by both examples. Also, since the function of the microorganism is to produce Xanthan gum, strain NRRL B-1459 or other proprietary mutant strains are not significant to the practice of this invention, other than the fact that the operational times, temperatures, etc., may vary with the variation of the starter strain. However, the proper change in cold water viscosity, and/or hot water viscosity will be obtained by this process.

Also, it has been shown that 15% moisture is a maximum amount. This corresponds with the maximum for FCC-III approval; however, it should not be considered a restriction or maximum for this dry process to work. Also, the exact type of drier is not critical but the heat rendered results are.

Finally, Examples 1-4 and 7-10 were dried and tested at lower end monolayer conditions, whereas Examples 5 and 6 were tested throughout the drying cycle. It appears that the viscosity change takes place in the latter state of drying. This is sometimes referred to as Stage II, the "Falling Rate Period". Stage I is called the "Constant Rate Period".

Moisture Profile of Examples 1-10.

All "as is" samples, whether paste or powder were analyzed to show moisture contents of 10% (wet of dry basis) or greater. The paste showed a dry matter (D.M.) content of 11.9% and 88.1% moisture. The moisture content ranges for each example were $V_1/V_2$ viscosity profiles and were between 1.02 and 1.45 as follows:

| | | % (dry basis) Moisture |
|---|---|---|
| Example | No. 1 | 2.2 - 0.0 |
| | No. 2 | 2.4 - 0.4 |
| | No. 3 | 2.6 - 0.2 |
| | No. 4 | 3.3 - 0.5 |
| | No. 5 | 4.8 - 0.9 |
| | No. 6 | 3.0 - 0.6 |
| | No. 7 | 3.7 - 0.5 |
| | No. 8 | 6.9 - 0.4 |
| | No. 9 | 4.0 - 0.4 |
| | No. 10 | 4.0 - 0.4 |

However, for viscosity testing purposes all samples were rehydrated so that 1.0% w/w solution had the same amount of dry matter for initial samples as well as treated samples.

For example, an initial sample with 10.0% moisture (wet basis) would have 2.70 gms of D.M. + 0.30 gms of indigenous water plus 3.00 gms of KCL plus 294.00 gms of added water. For this same treated sample of 0.5% moisture, the sample would be rehydrated to 10.0% moisture prior to solution preparation so as to result in a solution with identical solids content. If this were not done, the solution would have 2.85 gms D.M. and 0.15 gm indigenous water which would result in an inaccurate viscosity reading. However, results in the laboratory show that this moisture add back has no effect on the final $V_1/V_2$ viscosity profile change.

It appears that the latent heat of vaporization has a cooling effect of the D.M. and, therefore, even when the moisture is reduced to 0.0% as in Example No. 1 (which is basically a moisture analysis chamber) this cooling effect prevents D.M. destruction. However, if the sample is allowed to stay in the chamber for any extended period of time after the moisture is driven off, then case hardening will occur. In other examples where samples are thicker and thus mass transfer more difficult, some destruction can occur at slightly higher moisture contents. This is because the material on the outside layer is dryer than the material on the inside.

According to preferred embodiments of the invention the $V_1$ viscose element of Xanthan in the form of paste or "as is" material may be increased and the $V_1/V_2$ viscosity profile may be enhanced by:-

i) optionally equilibrating Xanthan paste at about 85 to 95% moisture

ii) thermal drying the Xanthan by elevated temperature of greater than 26°C(80°F.) at standard temperature pressure (STA) condition, so as to reduce the free moisture (preferably by at least 7%) and monolayer water (7 to 0.0% dry basis) down to the lower limit range and

iii) exposing the Xanthan powder or fibre to atmospheric conditions until moisture of 8 to 15% is reached or regained.

## Claims

1. A method of increasing the $V_1$ viscose element of Xanthan comprising:

a. equilibrating Xanthan at approximately 8 to 15% moisture;

b. thermal drying of said Xanthan by elevated temperature of greater than 26°C(80°F.) at standard temperature pressure (STA) condition, so as to reduce the free moisture (at least 7%) and monolayer water (7.0 to 0.0% dry basis) down to the lower limit range; then

c. exposing Xanthan to atmospheric conditions until approximately 8 to 15% moisture is regained.

2. A method of enhancing the $V_1/V_2$ viscosity profile of Xanthan comprising:

a. milling said Xanthan into a powder;

b. equilibrating said Xanthan powder at approximately 8 to 15% moisture;

c. thermal drying said Xanthan by elevated temperature of greater than 26°C(80°F.) at standard temperature pressure (STA) condition, so as to reduce the free moisture (at least 7%) and monolayer water (7.0 to 0.0% dry basis) down to the lower limit range; then

d. exposing the Xanthan powder to atmospheric conditions until moisture of approximately 8 to 15% is regained.

3. A method of increasing the $V_1/V_2$ viscosity profile of Xanthan as claimed in claim 2, wherein said thermal drying is by infrared heat lamp within a moisture chamber, such that said Xanthan powder is dried down to its monolayer without burning.

4. A method of increasing the $V_1/V_2$ viscosity profile of Xanthan as claimed in claim 2 or claim 3, including milling of said Xanthan to a fine powder at an approximate temperature of 54°C(130°F).

5. A method of increasing the $V_1/V_2$ viscosity profile of Xanthan as claimed in any one of claims 2, 3 or 4, including initially testing said Xanthan powder with dioctyl sodium sulfosuccinate (DSS) at a level not to exceed 0.75% DSS based upon the weight of bipolymer Xanthan.

6. A method of increasing the $V_1/V_2$ viscosity profile of Xanthan as claimed in claim 2, wherein said thermal drying is by microwave for a period of time sufficient to reduce the moisture content to its monolayer without burning.

7. A method of increasing the $V_1/V_2$ viscosity profile of Xanthan as claimed in any one of claims 2 to 5, wherein said thermal drying is by heating at about 107°C (225°F.) for approximately two hours, while maintaining said powder in an approximately 25 mm (1") thick layer and transferring said powder from tray to tray every five to eight minutes.

8. A method of increasing the $V_1/V_2$ viscosity profile of Xanthan as claimed in any one of claims 2 to 5, wherein said thermal drying of Xanthan powder is under gradient conditions and includes supporting said powder in an approximately 25 mm (1") thick layer and radiantly heating at a first interval of 60 to 79°C (140 to 175°F.) and at a second interval of 93 to 107°C(200 to 225°F.) over an approximate period of four hours.

9. A method of increasing the $V_1/V_2$ viscosity profile of Xanthan as claimed in any one of claims 2 to 8, wherein the $V_1$ viscosity is maintained within the range of 1.02 to 1.45.

10. A method of increasing the $V_1/V_2$ viscosity profile of Xanthan as claimed in any one of claims 2 to 9, wherein the $V_1$ viscosity is increased and the $V_2$ viscosity is decreased.

11. A method of increasing the $V_1/V_2$ viscosity profile of Xanthan as claimed in claim 10, wherein bacterium of the genus Xanthomonas is the biopolymer producer.

12. A method of enhancing the $V_1/V_2$ viscosity profile of Xanthan as claimed in claim 11, when appendant to any one of claims 2 to 7, wherein said thermal drying is under isothermal conditions.

13. A method of increasing the $V_1$ viscose element of Xanthan as claimed in claim 1, wherein the free moisture of said Xanthan is between 2.2 and 0.4% (dry basis).

14. A method of increasing the $V_1$ viscose element of Xanthan as claimed in claim 1 or claim 13, wherein said thermal drying of Xanthan in an initial volume ($V_1$), temperature ($T_1$) and pressure ($P_1$) is proportional to the changing parameters of processed temperature ($T_2$), processed pressure ($P_2$) and processed volume ($V_2$) in accordance with the perfect gas law, such that when freeze/vacuum drying is used, temperatures less than 26°C(80°F.) may also be incorporated.

15. A method of enhancing the $V_1/V_2$ viscosity profile of Xanthan as claimed in claim 2, wherein the enhanced $V_1/V_2$ viscosity profile is such that viscosity ($V_1$) is not less than 600 cps (using Brookfield/equivalent viscometer at 60 rpm) at 24°C(75°F.), and viscosity ($V_2$) at 41°C(105°F.) is such that the ratio of viscosity $V_1/V_2$ is between 1.02 and 1.45.